# DEMANDE DE BREVET EUROPEEN

(11) **EP 4 228 238 A1**
(43) Date de publication de la demande: **16.08.2023**
(21) Numéro de dépôt: 23154813.2
(22) Date de dépôt: 03.02.2023
(51) Int. Cl.: H04N 1/32, H04L 9/32

(54) **PROCEDE DE HACHAGE PARTIEL D'UN FLUX VIDEO**

(30) Priorité: 11.02.2022 FR 2201221
(71) Demandeur: STMICROELECTRONICS (GRENOBLE 2) SAS, 38000 Grenoble (FR)
(72) Inventeur: CHOSSAT, Jérôme, 38500 VOIRON (FR)
(74) Mandataire: Cabinet Beaumont

(57) **Abrégé**

La présente description concerne un procédé de transmission d'un flux vidéo comprenant :
- la génération, par un capteur d'image (102), d'un flux vidéo comprenant des première et deuxième images ;
- le hachage, par le capteur d'image (102), d'une partie de la première image sur la base d'une première configuration de hachage pour générer une première valeur de hachage, la première configuration définissant des premières positions de pixels à hacher ;
- le hachage, par le capteur d'image (102), d'une partie de la deuxième image sur la base d'une deuxième configuration de hachage pour générer une deuxième valeur de hachage, la deuxième configuration étant différente de la première configuration et définissant des deuxièmes positions de pixels à hacher ; et
- la transmission, par le capteur d'image (102) des première et deuxième images, et des première et deuxième valeurs de hachage, vers un deuxième dispositif (106).

## Description

### Domaine technique

La présente description concerne de façon générale la protection et la sécurisation du contenu d'images et plus particulièrement, d'un flux vidéo.

### Technique antérieure

Pour certaines applications, telles que des applications dans le domaine des automobiles, il est important d'assurer l'intégrité des images d'un flux vidéo transmises entre un capteur d'image et une unité de traitement. Une solution consiste à hacher les images avec une fonction de hachage côté capteur d'image, et d'appliquer la même fonction de hachage côté unité de traitement. Les résultats de hachages sont ensuite comparés afin de détecter d'éventuelles modifications.

Néanmoins, dans de telles applications, la cadence d'images enregistrées par le capteur d'image peut être élevée. De plus, il y a une tendance à augmenter la résolution des images. Il se peut que, dans certains cas, le capteur d'image ne soit pas assez performant pour appliquer une fonction de hachage à ces images tout en suivant la cadence du flux. De même, les fonctions de hachage mises en oeuvre par le processeur recevant ces images peuvent ne pas être assez rapides pour assurer le hachage entier de chaque image.

### Résumé de l'invention

Il existe un besoin d'améliorer les méthodes de hachage d'images provenant d'un flux vidéo.

Un mode de réalisation pallie tout ou partie des inconvénients des procédé de hachage partiel connus.

Un mode de réalisation prévoit un procédé de transmission d'un flux vidéo comprenant :
- la génération, par un capteur d'image, d'un flux vidéo comprenant des première et deuxième images, chaque image étant un agencement de pixels à des positions de pixels correspondantes, chaque pixel étant associés à une ou plusieurs données de pixels ;
- le hachage, par le capteur d'image, d'une partie de la première image sur la base d'une première configuration de hachage pour générer une première valeur de hachage, la première configuration définissant des premières positions de pixels à hacher ;
- le hachage, par le capteur d'image, d'une partie de la deuxième image sur la base d'une deuxième configuration de hachage pour générer une deuxième valeur de hachage, la deuxième configuration étant différente de la première configuration et définissant des deuxièmes positions de pixels à hacher ; et
- la transmission, par le capteur d'image des première et deuxième images, et des première et deuxième valeurs de hachage, vers un deuxième dispositif.

Selon un mode de réalisation, au moins une position de pixel parmi les premières positions de pixels n'appartient pas aux deuxièmes positions et/ou au moins une position de pixel parmi les deuxièmes positions de pixels n'appartient pas aux premières positions.

Selon un mode de réalisation, le procédé ci-dessus comprend en outre :
- la transmission, par le capteur d'image vers le deuxième dispositif, d'une ou plusieurs valeurs indiquant les première et deuxième configurations de hachage.

Selon un mode de réalisation, le procédé ci-dessus comprend, avant lesdits hachages partiels des première et deuxième images, la réception par le capteur d'image, à partir du deuxième dispositif, d'une table des configurations dans laquelle sont indexées au moins la première et la deuxième configurations de hachage, la première configuration étant indexée à un premier index et la deuxième configuration étant indexée à un deuxième index, le procédé comprenant en outre la transmission, par le capteur d'image, des premier et deuxième index au deuxième dispositif.

Selon un mode de réalisation, la table des configurations reçue par le capteur d'image est chiffrée, le procédé comprenant en outre le déchiffrement, par le capteur d'image, de la table des configurations chiffrée.

Selon un mode de réalisation, le premier index est transmis au deuxième dispositif dans une ligne d'état de la première image et le deuxième index est transmis au deuxième dispositif dans une ligne d'état de la deuxième image.

Selon un mode de réalisation, les premier et deuxième index sont sélectionnés de manière aléatoire, par le capteur d'image, parmi au moins trois index de la table des configurations.

Selon un mode de réalisation :
- la première configuration de hachage est indiquée, au deuxième dispositif, par le capteur d'image dans une ligne d'état de la première image ; et
- la deuxième configuration de hachage est indiquée, au deuxième dispositif, par le capteur d'image, dans une ligne d'état de la deuxième image.

Selon un mode de réalisation, lesdites étapes de hachage comprennent l'utilisation de l'algorithme de hachage SHA-2.

Selon un mode de réalisation, la proportion de premières positions de pixels à hacher parmi la totalité des pixels de la première image est comprise entre 25% et 80%, et la proportion de deuxièmes positions de pixels à hacher parmi la totalité des pixels de la deuxième image est comprise entre 25% et 80%.

Selon un mode de réalisation, chaque image du flux vidéo est composée de plusieurs paquets de données, chaque paquet comprenant plusieurs données de pixel associées aux pixels de l'image, la taille de chaque paquet de données étant programmable ; et chacune des première et deuxième configurations définissant :
- la taille d'un ou plusieurs paquets d'une image à hacher ; ou
- la taille d'un ou plusieurs paquets d'une image à ne pas hacher ; ou
- la taille d'un ou plusieurs paquets d'une image à hacher et la taille d'un plusieurs paquets d'une image à ne pas hacher.

Selon un mode de réalisation, le procédé ci-dessus comprend en outre la génération de façon aléatoire, par un générateur de nombres aléatoires, de la taille dudit un ou plusieurs paquets de l'image à hacher et/ou la taille dudit un ou plusieurs paquets de l'image à ne pas hacher.

Un mode de réalisation prévoit un procédé de vérification d'intégrité d'un flux vidéo, comprenant :
- la réception, par un dispositif de traitement, d'un flux vidéo comprenant des première et deuxième images, chaque image étant un agencement de pixels à des positions de pixels correspondants, chaque pixel étant associés à une ou plusieurs données de pixels ;
- la réception, par le dispositif de traitement, d'une première valeur de hachage associée avec la première image et d'une deuxième valeur de hachage associée avec la deuxième image ;
- le hachage, par le dispositif de traitement, d'une partie de la première image sur la base d'une première configuration de hachage pour générer une autre première valeur de hachage, la première configuration définissant des premières positions de pixels à hacher ;

- le hachage, par le dispositif de traitement, d'une partie de la deuxième image sur la base d'une deuxième configuration de hachage pour générer une autre deuxième valeur de hachage, la deuxième configuration étant différente de la première configuration et définissant des deuxièmes positions de pixels à hacher ; et
- la vérification, par le dispositif de traitement, de l'intégrité du flux vidéo sur la base d'une première comparaison de la première valeur de hachage avec l'autre première valeur de hachage et d'une deuxième comparaison de la deuxième valeur de hachage avec l'autre deuxième valeur de hachage.

Selon un mode de réalisation, le procédé ci-dessus comprend en outre :
- la détermination, par le dispositif de traitement, les premières et deuxièmes positions de pixels à hacher en fonction d'une séquence aléatoire générée à partir d'une graine ; et
- la transmission, par le dispositif de traitement, la graine au capteur d'image.

Selon un mode de réalisation, le procédé ci-dessus comprend en outre, si la première valeur de hachage ne correspond pas à l'autre première valeur de hachage, ou la deuxième valeur de hachage ne correspond pas à l'autre deuxième valeur de hachage, la désactivation du capteur d'image.

Un mode de réalisation prévoit un capteur d'image comprenant :
une matrice de pixels configurée pour capturer des images ;
un premier dispositif de traitement configuré pour recevoir des images capturées par la matrice de pixels, pour générer un flux vidéo comprenant au moins une première image et au moins une deuxième image, et pour transmettre le flux vidéo vers un deuxième dispositif, chaque image étant un agencement de pixels à des positions de pixels correspondantes, chaque pixel étant associés à une ou plusieurs données de pixels ;
un circuit de hachage configuré pour :
   - hacher une partie de la première image, sur la base d'une première configuration de hachage, pour générer une première valeur de hachage et transmettre la première valeur de hachage au deuxième dispositif, la première configuration définissant des premières positions de pixels à hacher ; et
   - hacher une partie de la deuxième image, sur la base d'une deuxième configuration de hachage, pour générer une deuxième valeur de hachage et transmettre la deuxième valeur de hachage au deuxième dispositif, la deuxième configuration étant différente de la première configuration et définissant des deuxièmes positions de pixels à hacher.

Un mode de réalisation prévoit un dispositif de traitement configuré pour :
- recevoir un flux vidéo comprenant des première et deuxième images, chaque image étant un agencement de pixels à des positions de pixels correspondantes, chaque pixel étant associé à une ou plusieurs données de pixels ;
- recevoir une première valeur de hachage associée avec la première image et une deuxième valeur de hachage associée avec la deuxième image ;
- hacher une partie de la première image sur la base d'une première configuration de hachage pour générer une autre première valeur de hachage, la première configuration définissant des premières positions de pixels à hacher ;
- hacher une partie de la deuxième image, sur la base d'une deuxième configuration de hachage, pour générer une autre deuxième valeur de hachage, la deuxième configuration étant différente de la première configuration et définissant des deuxièmes positions de pixels à hacher ; et
- vérifier l'intégrité du flux vidéo sur la base d'une première comparaison de la première valeur de hachage avec l'autre première valeur de hachage et d'une deuxième comparaison de la deuxième valeur de hachage avec l'autre deuxième valeur de hachage.

Un mode de réalisation prévoit un dispositif comprenant le capteur d'image relié au dispositif de traitement par un ou plusieurs bus de communication.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un dispositif de capture et de traitement d'un flux vidéo selon un mode de réalisation de la présente description ;
la figure 2 représente, de façon très schématique et sous forme de blocs, le dispositif de la figure 1 plus en détail selon un mode de réalisation de la présente description ;
la figure 3 représente une image et illustre un exemple de configuration de hachage partiel d'une image ;
la figure 4 représente un flux de paquets d'une image et illustre un exemple de configuration de hachage partiel d'une image ;
la figure 5 est un organigramme représentant des opérations d'un procédé de transmission et de vérification d'intégrité d'un flux vidéo selon un exemple de réalisation de la présente description ;
la figure 6 est un organigramme représentant des opérations d'un procédé de transmission et de vérification d'intégrité d'un flux vidéo selon un autre exemple de réalisation de la présente description ; et
la figure 7 est un organigramme représentant des opérations d'un procédé de transmission et de vérification d'intégrité d'un flux vidéo selon encore un autre exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les méthodes de traitements d'images telles que les réductions de dimension, les différents algorithmes de hachage d'images ainsi que l'implémentation du capteur d'image et de l'unité de traitement ne sont pas décrit en détail et sont à la portée de la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

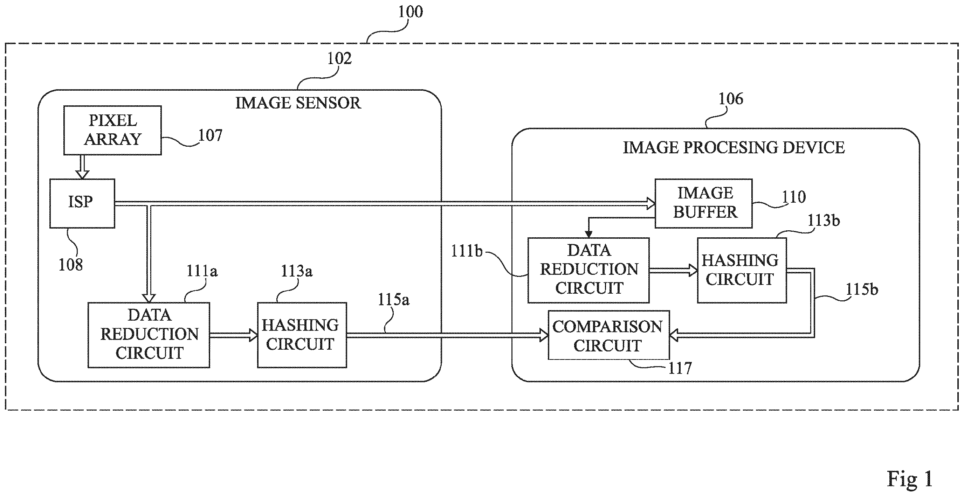

La figure 1 représente, de façon très schématique et sous forme de blocs, un dispositif 100 configuré pour capturer et traiter un flux vidéo. Par exemple, le dispositif 100 fait partie d'une automobile et est configuré pour capturer et enregistrer, par l'intermédiaire d'un capteur d'image 102 (IMAGE SENSOR), l'environnement de l'automobile. Dans un autre exemple, le dispositif 100 fait partie d'un centre de contrôle et est par exemple configuré pour détecter, via le flux vidéo enregistré par le capteur d'image 102, le passage d'individus dans une rue ou dans un bâtiment.

Le capteur d'image 102 est relié, par l'intermédiaire d'un bus 104, à une unité de traitement 106 (IMAGE PROCESSING DEVICE). L'unité de traitement 106 est par exemple configuré pour traiter les images du flux vidéo capturé par le capteur d'image 102. Dans le cas d'une application automobile, l'unité de traitement 106 est par exemple une unité de contrôle dans un véhicule (de l'anglais «ECU - Electronic Control Unit »). Dans cet exemple, l'unité de traitement 106 est par exemple configurée pour détecter des obstacles dans le flux vidéo, afin d'alerter le conducteur ou d'appliquer les freins de façon automatique. Dans une autre application, lorsque le dispositif 100 est installé dans un centre de contrôle d'entrée dans un bâtiment sécurisé, l'unité de traitement 106 est par exemple configurée pour détecter des mouvements et/ou pour implémenter un algorithme de reconnaissance faciale dans le flux vidéo. Dans ces applications, il est important que les images du flux vidéo transmis par le capteur d'image 102 à l'unité de traitement 106 ne soient pas falsifiées ou modifiées, et donc que l'intégrité de ces images soit vérifiée.

Le capteur d'image 102 comprend par exemple une matrice de pixels 107 (PIXEL ARRAY), configurée pour capturer des images formant le flux vidéo. Le flux vidéo capturé par la matrice de pixels 107 est par exemple fourni à un processeur 108 (ISP), intégré au capteur d'image 102. Le processeur 108 est par exemple un processeur de signal d'images (ISP - de l'anglais « Image Signal Processor ») comprenant un ou plusieurs processeurs configurés pour exécuter des logiciels, et/ou des circuit dédiés, implémentant les fonctions du processeur 108. Le processeur 108 est par exemple configuré pour recevoir des images brutes captées par la matrice de pixels 107, et utilise, par exemple, les données associées à chaque pixel pour générer des images traitées prêtes pour être envoyée vers l'unité de traitement 106. Dans d'autres modes de réalisation, le capteur d'image 102 transmet les images brutes, sans traitement, vers l'unité de traitement 106.

Le bus 104 est par exemple relié à une mémoire tampon 110 (IMAGE BUFFER) de l'unité de traitement 106, qui reçoit le flux vidéo, et stocke les images temporairement avant qu'elles soient traitées par d'autres processeurs/circuits (non illustrés dans la figure 1) de l'unité de traitement 106.

Le capteur d'image 102 comprend un circuit de hachage 113a (HASHING CIRCUIT), configuré pour générer des valeurs de hachages à partir des images du flux vidéo, et pour transmettre ces valeurs de hachage sur un bus 115a vers un comparateur 117 (COMPARISON CIRCUIT) de l'unité de traitement 106. L'unité de traitement 106 comprend également un circuit de hachage (HASHING CIRCUIT) 113b configuré pour générer des valeurs de hachages à partir des images du flux vidéo reçues par le bus 104, et pour fournir ces valeurs de hachage au comparateur 117, par l'intermédiaire d'un bus 115b.

A titre d'exemple, les deux circuits de hachage 113a, 113b mettent en oeuvre un même algorithme de hachage, tel que le SHA-2 (de l'anglais « Secure Hash Algorithm »). D'autres types d'algorithmes de hachage peuvent bien sûr être mis en oeuvre par les circuits de hachage 113a, 113b.

A titre d'exemple, le bus de données 104 transmet les images composant le flux vidéo à une vitesse d'environ 600 Mpx par seconde, soit environ 750 MBytes par seconde. Une telle vitesse ne permet pas, par exemple, au capteur d'image 102 de hacher les images reçues dans leur totalité tout en tenant la cadence du flux vidéo. En effet, les algorithmes de hachage, y compris le SHA-2, ne permettent pas une implémentation parallélisée afin d'augmenter la vitesse de traitement. La limitation peut également être due à une limitation de vitesse de traitement dans le circuit de hachage 113b de l'unité de traitement 106.

Une solution consiste à hacher uniquement une partie des images du flux vidéo. En particulier, afin de pouvoir hacher, de manière partielle, les images du flux vidéo généré par le capteur d'image 102, la quantité de données à hacher est d'abord réduite par un circuit de réduction de données 111a (DATA REDUCTION CIRCUIT) implémenté, par exemple, entre le processeur 108 et le circuit de hachage 113a. Un circuit de réduction de données 111b est également implémenté du côté de l'unité de traitement 106, par exemple entre le bus 104 et le circuit de hachage 113b. Les circuits de réduction de données 111a, 111b sont par exemple configurés pour ne sélectionner que certains pixels, ou groupes de pixels, des images pour être hachés. La puissance de traitement demandée aux circuits de hachages peut donc être réduite.

Les circuits de réduction de données 111a, 111b génèrent par exemples des image partielles, chaque image partielle étant composée uniquement d'une partie des pixels de l'image originale à partir de laquelle elle est générée. Les images partielles sont alors hachées par les circuits de hachage 113a, 113b. A titre d'exemple, le nombre de pixels à hacher dans chaque image partielle représente entre 20% et 80% du nombre total de pixels de l'image d'origine, de préférence environ 25%. Dans le cas où le nombre de pixels à hacher représente 25% du nombre total de pixels, la vitesse de transmission des données d'images vers le circuit de hachage 113 est alors réduite à environ 150 Mpxls par seconde, soit environ 190 MBytes par seconde.

Pour chaque image traitée, une valeur de hachage générée par le circuit de hachage 113a du côté du capteur d'image 102 et une valeur de hachage générée par le circuit de hachage 113b du côté de l'unité de traitement 106 sont transmises, par les bus de données 115a et 115b respectivement, vers le comparateur 117. Le comparateur 117 est configuré pour comparer les deux valeurs de hachage.

Dans le cas où les deux valeurs de hachage diffèrent, cela sous-entend que l'image reçue par l'unité de traitement 106, après réduction par le circuit de réduction 111b, n'est pas la même que l'image sortante du processeur d'image 108, après réduction par le circuit de réduction 111a. L'image a par exemple été falsifiée par un attaquant extérieur. A titre d'exemple, lorsque le comparateur 117 détecte une différence entre les deux valeurs de hachage, les images provenant du capteur d'image 102 sont par exemple ignorées, ou supprimées, par l'unité de traitement 106.

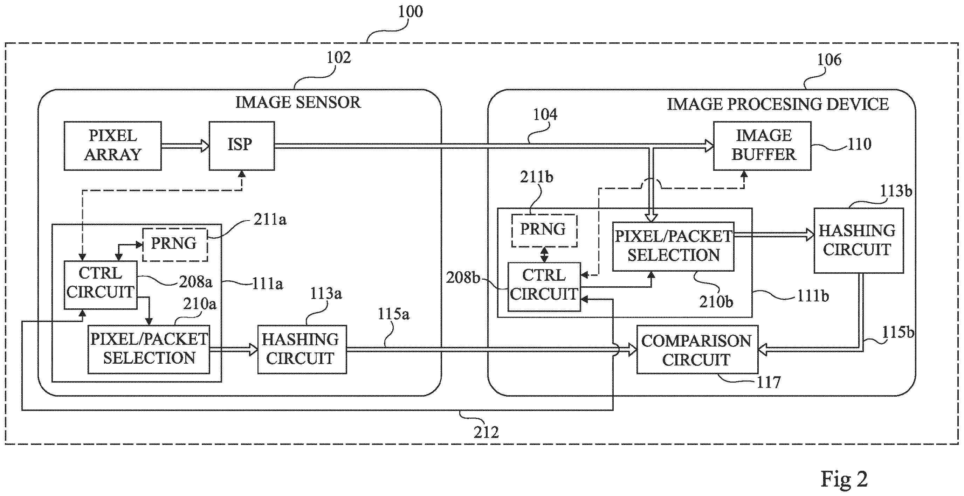

Si les parties des images sélectionnées par les circuits de réduction de données 111a, 111b pour être hachées sont les mêmes pour toutes les images, il sera possible pour un attaquant de déduire, à partir de plusieurs images partiellement hachées, quelles sont les parties des images protégées par hachage, et quelles sont les parties non protégées. Ainsi, un attaquant peut falsifier les parties non protégées du flux vidéo. Une solution consiste à varier la sélection de pixels à hacher par les circuits de réduction de données 111a, 111b, comme cela va maintenant être décrit plus en détail en relation avec la figure 2.

La figure 2 représente, de façon très schématique et sous forme de blocs, le dispositif 100, et représente en particulier les circuits de réduction de données 111a, 111b plus en détail.

Les circuits de réduction de données 111a, 111b du capteur d'image 102 et de l'unité de traitement 106 comprennent, chacun, un circuit de contrôle 208a, 208b (CTRL CIRCUIT), relié, par exemple par des bus de contrôle, à des circuits de sélection de pixels ou paquets 210a et 210b (PIXEL/PACKET SELECTION). Les circuits de contrôle 208a et 208b sont, par exemple, reliés entre eux par un bus 212. Bien que les circuits de contrôle 208a et 208b sont reliés entre eux par un bus de contrôle 212 dans la figure 2, dans d'autres modes de réalisation, il serait possible qu'aucun bus ne soit présent, pourvu que les programmations des circuits de réduction de données 111a et 111b soient cohérentes entre elles.

Dans certains modes de réalisation, décrits plus en détail ci-dessous, le circuit 111a comprend en outre un générateur de nombres pseudo-aléatoires 211a (PRNG), et de façon similaire le circuit 111b comprend en outre un générateur de nombres pseudo-aléatoires 211b (PRNG), les générateurs 211a, 211b étant implémentés de la même manière et utilisent une même racine de comptage de manière à reproduire un même nombre de part et d'autre des générateurs de nombres 211a et 211b.

Côté capteur d'image 102, le circuit de sélection de pixels ou paquets 210a reçoit le flux vidéo du bus 104, et fournit les images partielles au circuit de hachage 113a. De façon similaire, côté unité de traitement 106, le circuit de sélection de pixels ou paquets 210b reçoit le flux vidéo du bus 104, et fournit les images partielles au circuit de hachage 113b.

Dans certains cas, l'étape de sélection implémentée par les circuits 210a, 210b est réalisée au niveau des pixels des images, certains pixels de chaque image étant sélectionnés pour être hachés.

Dans d'autre cas, le flux vidéo est formé par un flux de paquets, les données de chaque image du flux vidéo étant divisées en une pluralité de paquets de données d'image. Chaque paquet contient, par exemple, les données de pixel de plusieurs pixels d'une image. Dans ce cas, l'étape de sélection implémentée par les circuits 210a, 210b est par exemple réalisée au niveau de ces paquets de données, un ou plusieurs des paquets de chaque image étant sélectionnés pour être hachés.

Les circuits de contrôle 208a, 208b sont par exemple configurés pour contrôler les circuits de sélection de pixels ou paquets 210a et 210b de sorte que ces circuits 210a, 210b réalisent la même sélection.

A titre d'exemple, une configuration de hachage est déterminée du côté de l'unité de traitement 206. Cette configuration de hachage décrit, par exemple, une ou plusieurs positions de pixel qui sont à hacher. Par exemple, les positions de pixel sont définies par un ou plusieurs paramètres de sélection de pixels de l'image, ou par un ou plusieurs paramètres de sélection de paquets du flux de paquets. Le circuit de contrôle 208b est alors, par exemple, configuré pour transmettre la configuration de hachage au circuit de contrôle 208a. Les circuits de contrôle 208a et 208b commandent ensuite les circuits de sélection 210a et 210b pour que ceux-ci appliquent la configuration de hachage aux images reçues afin de les réduire partiellement. Afin d'assurer une protection des images, cette sélection est, par exemple, dynamiquement modifiée à chaque image, ou à chaque groupe d'images. De plus, dans certains cas cette sélection demeure secrète en étant uniquement connue des circuits 102 et 106.

Dans un autre exemple, la configuration de hachage est déterminée du côté du capteur d'image 202 et est transmise au circuit de contrôle 208b par l'intermédiaire du bus 212.

Selon encore un autre mode de réalisation, la configuration de hachage est indiquée directement dans l'image, par exemple dans une ligne d'état, par le processeur d'images 108. Le circuit 208a est par exemple relié au processeur d'images 108 et est configuré pour récupérer les données de la ligne d'état. De même, le circuit de contrôle 208b est par exemple relié à la mémoire tampon 110, et est configuré pour récupérer les données de la ligne d'état de l'image reçue.

Afin de rendre difficilement discernable les parties hachées ou non des images du flux vidéo, les circuits de contrôle 208a et 208b sont, par exemple, configurés pour faire varier la configuration de hachage d'une image à l'autre, ou d'un nombre n d'images à l'autre, où n est par exemple égal ou inférieur à 10. Ainsi, la partie des images hachée diffère selon les images du flux vidéo. Il est alors difficile pour un attaquant de déduire, et par conséquent de modifier ou falsifier, les parties des images non protégées par hachage.

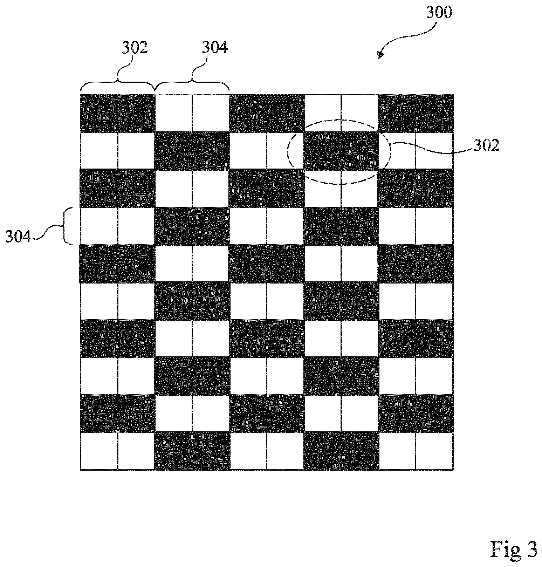

La figure 3 illustre un exemple de configuration de hachage partiel d'une image 300. Bien que dans l'exemple de la figure 3 l'image 300 est composée de 100 pixels agencés sur 10 lignes et 10 colonnes, toute taille et format d'image est possible. En effet, dans la pratique, les images capturées par le capteur d'image 102 sont de taille importante, par exemple plusieurs milliers de pixels de largeur et de longueur. L'image 300 est un agencement de pixels à des positions de pixels correspondantes, et chaque pixel est associé à une ou plusieurs données de pixels correspondantes. Par exemple, l'une ou plusieurs données de pixel définissent une valeur de luminance, une valeur de chrominance, et/ou d'autres valeurs. Les données de pixel des pixels composant l'image 300 ne sont pas illustrées en figure 3.

Un exemple de configuration de hachage de l'image 300 consiste à hacher uniquement des groupes 302 de pixels consécutifs (illustrés en noir) et à ne pas hacher des groupes 304 de pixels consécutifs (illustrés en blanc). Dans l'exemple de la figure 3, les groupes 302 et 304 ont la même taille, et chaque groupe est composé de deux pixels. Dans d'autres modes de réalisation, les groupes 302 et 304 sont de taille différente, et/ou le nombre de pixels dans chaque groupe est différent de deux.

A titre d'exemple, l'image 300 est traitée ligne par ligne et la configuration de hachage partiel illustrée en figure 3 consiste donc à hacher les deux premiers pixels de la première ligne, puis à ne pas hacher les deux pixels suivants ainsi de suite jusqu'à la fin de la première ligne. Les deux premiers pixels de la deuxième ligne ne seront pas hachés, les deux pixels suivants seront hachés et ainsi de suite jusqu'à la fin de la deuxième ligne, puis jusqu'à la fin de l'image 300. Dans l'exemple de la figure 3, pour deux configurations de hachage différentes, les positions des pixels à hacher dans l'image diffèrent. Autrement dit, certaines positions de pixels à hacher dans une première configuration de hachage ne sont pas à hacher dans une deuxième configuration de hachage. Par exemple, le nombre de pixels dans chaque groupe 302 à hacher varie entre les première et deuxième configurations, et/ou le nombre de pixels dans chaque groupe 304 varie entre les première et deuxième configurations.

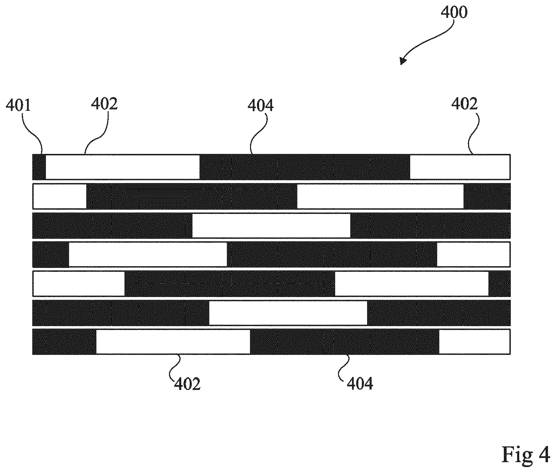

La figure 4 représente un flux de paquets 400 d'une image et illustre un exemple de configuration de hachage.

Selon le mode de réalisation représenté par la figure 4, chaque image du flux vidéo est composée de plusieurs paquets de données, et la taille des paquets de données est programmable. Par exemple, en référence à la figure 2, le processeur 108 est configuré pour générer les paquets de données de chaque image avec une certaine taille en termes du nombre de pixels représentés par le paquet. Le circuit de contrôle 208a est par exemple configuré pour commander la taille des paquets générés par le processeur 108 selon la configuration à appliquer. Uniquement certains paquets sont ensuite sélectionnés, par les circuits de sélection 210a, 210b pour être hachés.

Dans la figure 4, une séquence de paquets d'une image est représentée, les paquets en noir étant des paquets qui ne sont pas hachés, et les paquets en blanc étant des paquets qui sont hachés.

L'exemple de configuration de hachage du flux de paquets 400 comprend, par exemple, un premier paramètre décrivant un décalage initial correspondant à la taille d'un premier paquet 401. Le premier paquet 401 est le premier paquet composant le flux de paquet 400 et n'est pas haché. La configuration de hachage partiel comprend par exemple un deuxième paramètre définissant la taille des paquets à hacher 402 ainsi qu'un troisième paramètre définissant la taille des paquets à ne pas hacher 404, autrement dit la taille des paquets à sauter entre deux hachages de paquets 402. Dans l'exemple de la figure 4, le décalage initial 401, la taille des paquets 402 et/ou la taille des paquets 404, varient d'une configuration à l'autre.

Les paramètres de la configuration décrite en relation avec figure 4 sont présentés à titre d'exemple et ne sont pas limitatifs, d'autres types de paramètres sont bien sûr envisageables. Par exemple, il serait possible que, dans d'autres modes de réalisation :
- la taille du premier paquet 401 soit fixe pour chaque image du flux vidéo ; et/ou
- la taille des paquets à hacher soit fixe pour chaque image du flux vidéo, et uniquement la taille des paquets à ne pas hacher soit variable ; ou
- la taille des paquets à ne pas hacher soit fixe pour chaque image du flux vidéo, et uniquement la taille des paquets à hacher soit variable.

De plus, dans d'autre modes de réalisation, la taille des paquets générés par le processeur 108 est fixe, et les circuits de sélection 210a, 210b sont configurés pour sélectionner, sur contrôle des circuits 208a, 208b, le nombre de paquets consécutifs qui sont hachés, et/ou le nombre de paquets consécutifs qui ne sont pas hachés.

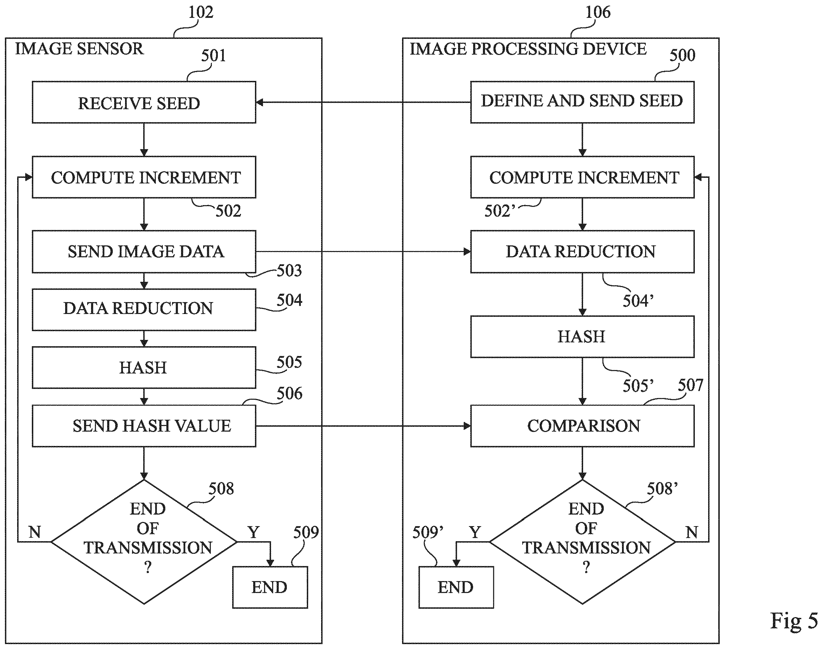

La figure 5 est un organigramme représentant des opérations d'un procédé de transmission et de vérification d'intégrité des images d'un flux vidéo dans le dispositif 100 des figures 1 et 2 selon un exemple de réalisation de la présente description. Les étapes réalisées par le capteur d'image (IMAGE SENSOR) 102, et par l'unité de traitement (IMAGE PROCESSING DEVICE) 106, sont représentées.

Dans une étape 500 (DEFINE AND SEND SEED), l'unité de traitement 106 génère une graine d'une séquence aléatoire et la transmet au capteur d'image 102, qui la reçoit dans une étape 501 (RECEIVE SEED). A titre d'exemple, la transmission de la graine est cryptée afin d'améliorer la sécurité. La graine aléatoire est ensuite utilisée par le capteur d'image 102 et par l'unité de traitement 106 pour générer un nombre ou une séquence de nombres. La graine est par exemple injectée, comme état de départ, dans les générateurs de nombres pseudo-aléatoires 211a, 211b implémentés dans le capteur d'image 102 et dans l'unité de traitement 106. Le nombre généré, ou la séquence de nombres générés, est ainsi identique du côté du capteur d'image 102 et du côté de l'unité de traitement 106.

Dans une étape 502 (COMPUTE INCREMENT) effectuée par le capteur d'image 102, et une étape similaire 502' (COMPUTE INCREMENT) effectuée par l'unité de traitement 106, le capteur d'image 102 et l'unité de traitement 206 déterminent, chacune de leur côté, la configuration de hachage à appliquer sur la base du nombre généré par les générateurs 211a, 211b. Par exemple, cette étape est réalisée par les circuits de contrôle 208a, 208b, qui comprennent chacun un accumulateur (non illustré). L'accumulateur de chaque circuit de contrôle 208a, 208b est initialement à une même valeur de départ, égale par exemple à zéro. Le nombre généré par les générateurs 211a, 211b est par exemple utilisé par chaque circuit de contrôle 208a, 208b pour calculer un incrément, qui peut être égal au nombre généré, ou déterminé en fonction du nombre généré. L'incrément est par exemple ajouté à la valeur initiale de l'accumulateur, et le résultat est fourni par l'accumulateur comme valeur en sortie. La valeur en sortie de l'accumulateur définit par exemple le nombre de pixels des groupes 302 et 304 de la figure 3, ou la taille du décalage initial 401 et/ou la taille des paquets 402 et/ou la taille des paquets 404 décrits en relation avec la figure 4. Dans une étape 503 (SEND IMAGE DATA), postérieure à l'étape 502, le capteur d'image 102 transmet un ou plusieurs paquets ou une ou plusieurs images, par exemple par l'intermédiaire du bus de données 104, à l'unité de traitement 106. En effet, dans certains modes de réalisation, les paramètres de hachage sont modulés au sein d'une même image. Par exemple, la taille des paquets 404 est recalculée, sur la base de l'accumulateur, suite à chaque traitement d'un paquet 402. Dans d'autres modes de réalisation, chaque paramètre de hachage est appliqué à une ou plusieurs images avant d'être modulé.

Dans une étape 504 (DATA REDUCTION) réalisée par le capteur d'image 102, et une étape 504' (DATA REDUCTION) réalisée par l'unité de traitement 106, les circuits de réduction de données 111a, 111b effectuent une réduction de la ou des images reçues sur la base de la configuration définie par la valeur en sortie de l'accumulateur. Côté capteur d'image 102, l'image est par exemple réduite par le circuit de sélection 210a sous la commande du circuit de contrôle 208a, et côté unité de traitement 106, l'image est par exemple réduite par le circuit de sélection 210b sous la commande du circuit de contrôle 208b.

Dans une étape 505 (HASH) réalisée par le capteur d'image 102, et une étape 505' (HASH) réalisée par l'unité de traitement 106, les images réduites sont ensuite hachées, par les circuits de hachage 113a, 113b.

Dans une étape 506 (SEND HASH VALUE), la valeur de hachage obtenue du côté du capteur d'image 102 est transmise à l'unité de traitement 106, et en particulier au comparateur 117.

La valeur de hachage transmise par le capteur d'image 102 est alors comparée à la valeur de hachage générée dans l'unité de traitement 106 par le circuit de hachage 113b. Une étape 507 permet de déterminer si l'image transmise par le capteur d'image 102 a été falsifiée ou modifiée. Si les deux valeurs de hachage sont identiques, l'image reçue côté unité de traitement 106 est considérée comme intègre, et l'image poursuit par exemple un traitement par l'unité de traitement 106 dépendant de l'application. Si toutefois les deux valeurs de hachage ne sont pas identiques, l'image reçue côté unité de traitement 106 est considérée comme étant corrompue, et cette image est par exemple supprimée sans poursuivre d'autre traitement par l'unité de traitement 106.

Une étape 508 (END OF TRANSMISSION) faisant suite à l'étape 506 côté capteur d'image 102, et une étape similaire 508' (END OF TRANSMISSION) faisant suite à l'étape 507 côté unité de traitement 106, consistent à déterminer si la transmission vidéo est terminée. Si non (branche « N »), le procédé reprend à l'étape 502 côté capteur d'image 102 et à l'étape 502' côté unité de traitement 106, dans lesquelles une nouvelle valeur d'incrément est calculée par les accumulateurs en ajoutant un nouveau nombre fourni par les générateurs 211a, 211b. S'il est déterminé, dans les étapes 508, 508', que la transmission est terminée, le procédé prend fin dans des étapes (END) 509, 509' correspondantes.

Bien que dans l'exemple de procédé de la figure 5 la configuration de hachage est modifiée pour chaque image, dans d'autres exemples, la configuration de hachage n'est modifiée qu'après qu'elle ait été utilisée pour n images consécutives du flux vidéo. Autrement dit, une même configuration, sur la base d'une valeur de l'accumulateur est utilisée sur un nombre n d'images consécutives du flux vidéo.

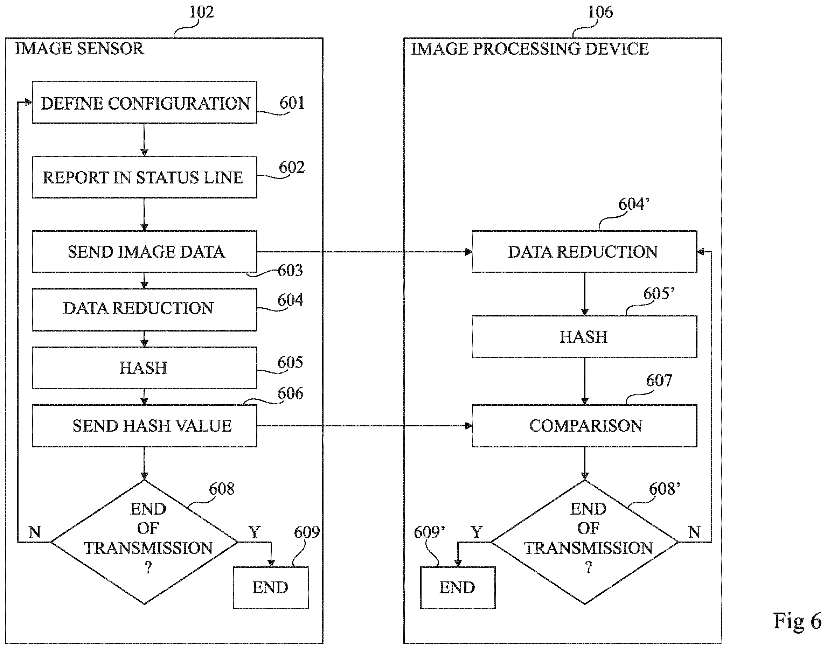

La figure 6 est un organigramme représentant des opérations d'un procédé de transmission et de vérification d'intégrité d'un flux vidéo selon un autre exemple de réalisation de la présente description.

Dans une étape 601 (DEFINE CONFIGURATION), le capteur d'image 102 définit une configuration de hachage. La configuration de hachage est par exemple définie par le nombre de pixels des groupes 302 et 304 de la figure 3, ou par des paramètres tels le décalage initial 401 et/ou la taille des paquets 402 et/ou la taille des paquets 404 de la figure 4.

Dans une étape 602 (REPORT IN STATUS LINE), le capteur d'image 102 reporte, par exemple par l'intermédiaire du processeur d'image 108, la configuration de hachage définie dans l'étape 601 dans une ligne d'état d'une ou plusieurs images consécutives du flux vidéo. Selon un mode de réalisation, la configuration de hachage est reportée dans une forme cryptée afin d'augmenter la sécurité.

Après l'étape 602, des étapes 603 à 609 et 604' à 609', respectivement similaires aux étapes 503 à 509 et 504' et 509' du procédé de la figure 5, sont réalisées. Les étapes 603 à 609 et 604' à 609' ne sont pas décrites à nouveau en détail. Dans l'étape 604, le circuit de contrôle 208a est par exemple configuré pour appliquer la configuration définie dans l'étape 601 en contrôlant le circuit de sélection 210a. De façon similaire, dans l'étape 604', le circuit de contrôle 208b est par exemple relié à la mémoire tampon 110 et est configuré pour lire la ligne d'état de la ou des images reçues, afin d'appliquer la configuration définie par le capteur d'image 102 en contrôlant le circuit de sélection 210b. L'unité de traitement 106 effectue alors, par l'intermédiaire du circuit de sélection 210b commandé par le circuit de contrôle 208b, une réduction de la ou des images dans l'étape 604. L'image est alors réduite sur la base de la configuration indiquée dans la ligne d'état.

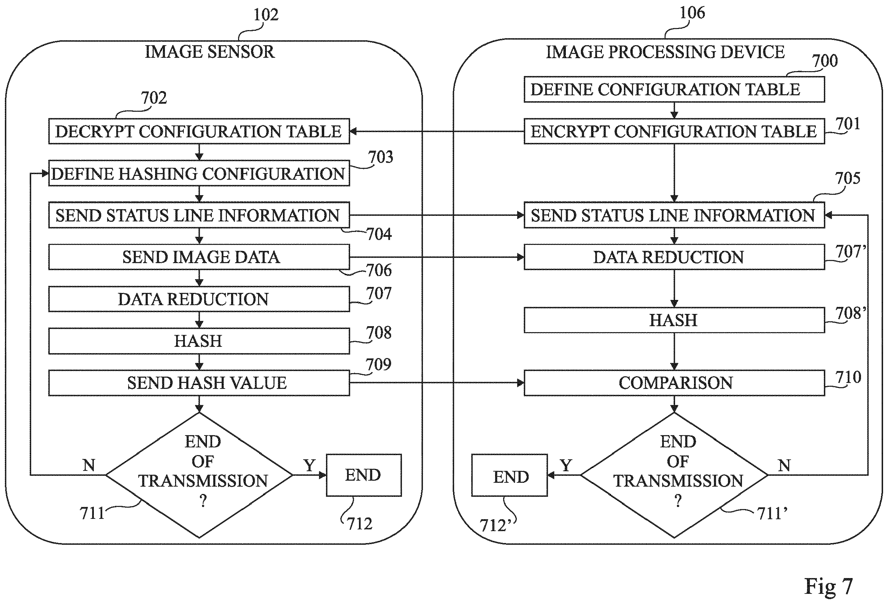

La figure 7 est un organigramme représentant des opérations d'un procédé de transmission et de vérification d'intégrité d'un flux vidéo selon un autre exemple de réalisation de la présente description.

Dans une étape 700 (DEFINE CONFIGURATION TABLE), ayant lieu avant l'enregistrement du flux vidéo par le capteur d'image 102, l'unité de traitement 106 génère, par exemple par l'intermédiaire d'un processeur générique faisant partie du circuit de contrôle 208b, une table contenant une pluralité de configurations différentes les unes par rapport aux autres. Par exemple, la table contient au moins trois configurations différentes, et dans certains cas au moins cinq configurations différentes. Ces différentes configurations sont, par exemple, définies par le nombre de pixels des groupes 302 et 304 de la figure 3, ou par des paramètres tels qu'un décalage initial 401 et/ou la taille des paquets 402 et/ou la taille des paquets 404 de la figure 4. D'autres manières de définir les différentes configurations sont bien sûr envisageables et sont à la portée de la personne du métier. Chaque configuration est par exemple indexée par un index correspondant dans la table des configurations.

L'unité de traitement 106 est par exemple configurée pour chiffrer ensuite la table des configurations dans une étape 701 (ENCRYPT CONFIGURATION TABLE). A titre d'exemple, l'algorithme de chiffrement utilisé est un algorithme de chiffrement à clef symétrique tel que l'AES (de l'anglais « Advanced Encryption Standard »). Dans un autre exemple, l'algorithme de chiffrement utilisé est un algorithme à clef asymétrique, utilisant des paires de clefs privées et publiques, tel que par exemple l'algorithme RSA (Rivest Shamir Alderman).

L'unité de traitement 106 est en outre configurée pour transmettre la table des configurations chiffrée au capteur d'image 102, qui la déchiffre dans une étape 702 (DECRYPT CONFIGURATION TABLE). A titre d'exemple le capteur d'image 102 et l'unité de traitement 106 contiennent chacun un processeur cryptographique configuré pour chiffrer et déchiffrer la table des configurations.

Dans une étape 703 (DEFINE HASHING CONFIGURATION), le capteur d'image 102 génère ensuite un index de la table auquel est indexée une configuration qui sera utilisée pour la ou les n premières images du flux, n étant un nombre entier positif, par exemple prédéterminé en amont de l'enregistrement du flux vidéo. L'index est par exemple obtenu par génération aléatoire.

Dans une étape 704 (SEND STATUS LINE INFORMATION), le capteur d'image 102 indique l'index de la table généré dans l'étape précédente dans une ligne d'état de la ou des n images consécutives du flux. Le capteur d'image 102 transmet ensuite la ligne d'état à l'unité de traitement 106.

Dans une étape 705 (RECEIVE STATUS LINE INFORMATION), l'unité de traitement 106 est configurée pour lire la ligne d'état. A titre d'exemple, la lecture est effectuée par le circuit de contrôle 208b.

Après l'étape 705, des étapes 706 à 712 et 707' à 712', respectivement similaires aux étapes 503 à 509 et 504 à 509' du procédé de la figure 5, sont réalisées, et ces étapes ne sont pas décrites à nouveau en détail.

Suite à l'étape 711 (END OF TRANSMISSION), si la transmission est toujours en cours, le procédé reprend à l'étape 703, et une nouvelle configuration est définie. La nouvelle configuration est par exemple obtenue par génération aléatoire d'une valeur d'index de la table des configurations. Dans un autre exemple une rotation des bits est appliquée à la valeur d'index précédemment utilisée afin d'obtenir le nouvel index. Par exemple, la table comprend six configurations indexées par des index à six bits "000001" à "100000", et une rotation de ces bits est utilisée afin de générer chaque index à son tour. Encore dans un autre exemple, la nouvelle valeur d'index est générée par l'unité de traitement 106, et est transmise au capteur d'image 102.

Un avantage des modes de réalisation décrits est qu'ils permettent à un dispositif ayant des performances de hachage limitées, de hacher partiellement les images d'un flux vidéo tout en apportant un niveau de sécurité important en variant les configurations de hachage. De préférence, les configurations de hachage sont rendues non-visibles à tout observateur des liens entre les unités 102 et 106.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le choix des différentes configurations et des paramètres les décrivant sont à la portée de la personne du métier. En effet, le nombre d'images consécutives auxquelles est appliquée une configuration peut être un des paramètres. Ainsi le nombre d'images consécutives hachées sur la base d'une même configuration varie en fonction de la configuration sélectionnée. De même, d'autres méthodes permettant au capteur d'image et à l'unité de traitement de hacher en parallèle des images sur la base de la même configuration sont à la portée de la personne du métier. De plus, bien que dans les exemples décrits le capteur d'image 102 et l'unité de traitement 106 font partie d'un même dispositif 100, dans d'autre modes de réalisation il serait possible que le capteur d'image 102 et l'unité de traitement 106 fassent partie de dispositifs différents reliés par une interface de communication pouvant être filaire ou bien sans fil.

Enfin, la mise en oeuvre pratique des modes de réalisation et variantes décrits est à la portée de la personne du métier à partir des indications fonctionnelles données ci-dessus. En particulier, les implémentations matérielles de l'unité de traitement 106 et du capteur d'image 102 sont à la portée de la personne du métier. De même l'implémentation des fonctions de réduction d'image et des fonctions de hachage sont à la portée de la personne du métier.

## Revendications

1. Procédé de transmission d'un flux vidéo comprenant :
- la génération, par un capteur d'image (102), d'un flux vidéo comprenant des première et deuxième images, chaque image étant un agencement de pixels à des positions de pixels correspondantes, chaque pixel étant associés à une ou plusieurs données de pixels ;
- le hachage, par le capteur d'image (102), d'une partie de la première image sur la base d'une première configuration de hachage pour générer une première valeur de hachage basée uniquement sur la partie de la première image, la première configuration définissant des premières positions de pixels à hacher ;
- le hachage, par le capteur d'image (102), d'une partie de la deuxième image sur la base d'une deuxième configuration de hachage pour générer une deuxième valeur de hachage basée uniquement sur la partie de la deuxième image, la deuxième configuration étant différente de la première configuration et définissant des deuxièmes positions de pixels à hacher ; et
- la transmission, par le capteur d'image (102) des première et deuxième images, et des première et deuxième valeurs de hachage, vers un deuxième dispositif (106).

2. Procédé selon la revendication 1, dans lequel au moins une position de pixel parmi les premières positions de pixels n'appartient pas aux deuxièmes positions et/ou au moins une position de pixel parmi les deuxièmes positions de pixels n'appartient pas aux premières positions.

3. Procédé selon la revendication 1 ou 2, comprenant en outre :
- la transmission, par le capteur d'image (102) vers le deuxième dispositif (106), d'une ou plusieurs valeurs indiquant les première et deuxième configurations de hachage.

4. Procédé selon l'une quelconque des revendications 1 à 3, comprenant, avant lesdits hachages partiels des première et deuxième images, la réception par le capteur d'image (102), à partir du deuxième dispositif (106), d'une table des configurations dans laquelle sont indexées au moins la première et la deuxième configurations de hachage, la première configuration étant indexée à un premier index et la deuxième configuration étant indexée à un deuxième index, le procédé comprenant en outre la transmission, par le capteur d'image, des premier et deuxième index au deuxième dispositif (106).

5. Procédé selon la revendication 4, dans lequel la table des configurations reçue par le capteur d'image (102) est chiffrée, le procédé comprenant en outre le déchiffrement, par le capteur d'image, de la table des configurations chiffrée.

6. Procédé selon la revendication 4 ou 5, dans lequel le premier index est transmis au deuxième dispositif (106) dans une ligne d'état de la première image et le deuxième index est transmis au deuxième dispositif (106) dans une ligne d'état de la deuxième image.

7. Procédé selon l'une quelconque des revendications 4 à 6, dans lequel les premier et deuxième index sont sélectionnés de manière aléatoire, par le capteur d'image, parmi au moins trois index de la table des configurations.

8. Procédé selon l'une quelconque des revendications 1 à 7, dans lequel :
- la première configuration de hachage est indiquée, au deuxième dispositif (106), par le capteur d'image (102) dans une ligne d'état de la première image ; et
- la deuxième configuration de hachage est indiquée, au deuxième dispositif (106), par le capteur d'image (102), dans une ligne d'état de la deuxième image.

9. Procédé selon l'une quelconque des revendications 1 à 8, dans lequel lesdites étapes de hachage comprennent l'utilisation de l'algorithme de hachage SHA-2.

10. Procédé selon l'une quelconque des revendications 1 à 9, dans lequel la proportion de premières positions de pixels à hacher parmi la totalité des pixels de la première image est comprise entre 25% et 80%, et la proportion de deuxièmes positions de pixels à hacher parmi la totalité des pixels de la deuxième image est comprise entre 25% et 80%.

11. Procédé selon l'une quelconque des revendications 1 à 10, dans lequel :
chaque image du flux vidéo est composée de plusieurs paquets de données, chaque paquet comprenant plusieurs données de pixel associées aux pixels de l'image, la taille de chaque paquet de données étant programmable ; et
chacune des première et deuxième configurations définissant :
- la taille d'un ou plusieurs paquets d'une image à hacher ; ou
- la taille d'un ou plusieurs paquets d'une image à ne pas hacher ; ou
- la taille d'un ou plusieurs paquets d'une image à hacher et la taille d'un plusieurs paquets d'une image à ne pas hacher.

12. Procédé selon la revendication 11, comprenant en outre la génération de façon aléatoire, par un générateur de nombres aléatoires (211a, 211b), de la taille dudit un ou plusieurs paquets de l'image à hacher et/ou la taille dudit un ou plusieurs paquets de l'image à ne pas hacher.

13. Procédé de vérification d'intégrité d'un flux vidéo, comprenant :
- la réception, par un dispositif de traitement (106), d'un flux vidéo comprenant des première et deuxième images, chaque image étant un agencement de pixels à des positions de pixels correspondants, chaque pixel étant associés à une ou plusieurs données de pixels ;
- la réception, par le dispositif de traitement (106), d'une première valeur de hachage associée avec la première image et d'une deuxième valeur de hachage associée avec la deuxième image ;
- le hachage, par le dispositif de traitement (106), d'une partie de la première image sur la base d'une première configuration de hachage pour générer une autre première valeur de hachage basée uniquement sur la partie de la première image, la première configuration définissant des premières positions de pixels à hacher ;
- le hachage, par le dispositif de traitement (106), d'une partie de la deuxième image sur la base d'une deuxième configuration de hachage pour générer une autre deuxième valeur de hachage basée uniquement sur la partie de la deuxième image, la deuxième configuration étant différente de la première configuration et définissant des deuxièmes positions de pixels à hacher ; et
- la vérification, par le dispositif de traitement (106), de l'intégrité du flux vidéo sur la base d'une première comparaison de la première valeur de hachage avec l'autre première valeur de hachage et d'une deuxième comparaison de la deuxième valeur de hachage avec l'autre deuxième valeur de hachage.

14. Procédé selon la revendication 13, comprenant en outre :
- la détermination, par le dispositif de traitement (106), des premières et deuxièmes positions de pixels à hacher en fonction d'une séquence aléatoire générée à partir d'une graine ; et
- la transmission, par le dispositif de traitement (106), de la graine au capteur d'image (106).

15. Procédé selon la revendication 13 ou 14, comprenant en outre, si la première valeur de hachage ne correspond pas à l'autre première valeur de hachage, ou la deuxième valeur de hachage ne correspond pas à l'autre deuxième valeur de hachage, la désactivation du capteur d'image (102) .

16. Capteur d'image comprenant :
une matrice de pixels (107) configurée pour capturer des images ;
un premier dispositif de traitement (108) configuré pour recevoir des images capturées par la matrice de pixels (107), pour générer un flux vidéo comprenant au moins une première image et au moins une deuxième image, et pour transmettre le flux vidéo vers un deuxième dispositif (106), chaque image étant un agencement de pixels à des positions de pixels correspondantes, chaque pixel étant associés à une ou plusieurs données de pixels ;
un circuit de hachage configuré pour :
- hacher une partie de la première image, sur la base d'une première configuration de hachage, pour générer une première valeur de hachage basée uniquement sur la partie de la première image et transmettre la première valeur de hachage au deuxième dispositif (106), la première configuration définissant des premières positions de pixels à hacher ; et
- hacher une partie de la deuxième image, sur la base d'une deuxième configuration de hachage, pour générer une deuxième valeur de hachage basée uniquement sur la partie de la deuxième image et transmettre la deuxième valeur de hachage au deuxième dispositif (106), la deuxième configuration étant différente de la première configuration et définissant des deuxièmes positions de pixels à hacher.

17. Dispositif de traitement configuré pour :
- recevoir un flux vidéo comprenant des première et deuxième images, chaque image étant un agencement de pixels à des positions de pixels correspondantes, chaque pixel étant associé à une ou plusieurs données de pixels ;
- recevoir une première valeur de hachage associée avec la première image et une deuxième valeur de hachage associée avec la deuxième image ;
- hacher une partie de la première image sur la base d'une première configuration de hachage pour générer une autre première valeur de hachage basée uniquement sur la partie de la première image, la première configuration définissant des premières positions de pixels à hacher ;
- hacher une partie de la deuxième image, sur la base d'une deuxième configuration de hachage, pour générer une autre deuxième valeur de hachage basée uniquement sur la partie de la deuxième image, la deuxième configuration étant différente de la première configuration et définissant des deuxièmes positions de pixels à hacher ; et
- vérifier l'intégrité du flux vidéo sur la base d'une première comparaison de la première valeur de hachage avec l'autre première valeur de hachage et d'une deuxième comparaison de la deuxième valeur de hachage avec l'autre deuxième valeur de hachage.

18. Dispositif comprenant le capteur d'image de la revendication 16 relié au dispositif de traitement de la revendication 17 par un ou plusieurs bus de communication.
